# EUROPÄISCHE PATENTSCHRIFT

(11) **EP 2 594 810 B1**
(45) Veröffentlichungstag und Bekanntmachung des Hinweises auf die Patenterteilung: **08.01.2014**
(21) Anmeldenummer: 11189735.1
(22) Anmeldetag: 18.11.2011
(51) Int. Cl.: F16B 5/02, F16B 19/02

(54) **Kopfschraube und Bauteilverschraubung**
Head screw and component screw
Vis à tête et vissage de composant

(43) Veröffentlichungstag der Anmeldung: 22.05.2013
(73) Patentinhaber: HAWE Hydraulik SE, 81673 München (DE)
(72) Erfinder: Macit, Recep, 81673 München (DE)
(74) Vertreter: Grünecker, Kinkeldey, Stockmair & Schwanhäusser

(56) Entgegenhaltungen:
- DE-A1- 3 146 518
- FR-A1- 2 486 174
- US-A- 3 178 984
- US-A- 3 298 725

## Beschreibung

Die Erfindung betrifft eine Kopfschraube gemäß Oberbegriff des Patentanspruchs 1 und eine Bauteilverschraubung gemäß Oberbegriff des Patentanspruchs 10.

Kopfschrauben für Bauteilverschraubungen im allgemeinen Maschinenbau und auch in der Hochdruckhydraulik unterliegen strengen DIN-ISO-Normen mit vorbestimmten Verhältnissen beispielsweise zwischen dem Schaft- oder Gewindedurchmesser und dem Kopfdurchmesser. In einer Bauteilverschraubung sitzt unter Anzugsspannung die kreisringförmige Unterseite des Kopfes entweder direkt oder unter Zwischenlage einer Unterlegscheibe oder eines Sprengringes oder dgl. entweder auf der Außenseite des Bauteils auf, so dass der Kopf übersteht, oder auf einer Schulter einer Kopfbohrung, in der der Kopf versenkt aufgenommen ist. Um ausreichende Belastbarkeit und Lösesicherung zu gewährleisten, ist der Unterschied zwischen dem Schaftdurchmesser und dem Kopfdurchmesser relativ groß, was eine großdimensionierte Kopfbohrung erfordert, wobei jedoch dennoch die Anzugsspannung nur zwischen der axial orientierten kreisringförmigen Unterseite des Kopfes und der Außenseite des Bauteils bzw. der Schulter wirksam ist. Da der Reibschluss nur zwischen den axial orientierten, jedoch relativ kleinen Kreisringflächen wirkt, genügten die erzielbare Belastbarkeit und die Lösesicherung der Bauteilverschraubung höheren Anforderungen nicht immer. Wird der Kopf in der Kopfbohrung versenkt, geben die Normungen ferner ein relativ großzügig bemessenes Radialspiel zwischen der Außenseite des Kopfes und der Innenwand der Kopfbohrung vor, was in relativ großem Platzbedarf in Durchmesserrichtung für die Kopfbohrung resultiert. Beispielsweise in der Hochdruckhydraulik sind die Dimensionen von Blöcken von Hydraulikkomponenten auf gewünschte Funktionen zugemessen knapp bemessen, was es erschwert, mehrere Bauteilverschraubungen wegen des jeweils in Durchmesserrichtung unzweckmäßig großen Platzbedarfes des Kopfes unterzubringen, insbesondere falls mehrere Kopfschrauben überstehend oder versenkt einzubringen sind.

Aus US 3 298 725 A sind eine gattungsgemäße Kopfschraube und eine Bauteilverbindung mit einer solchen Kopfschraube bekannt, wobei die Kopfschraube einen Sechskantkopf aufweist, der in der Bauteilverbindung außerhalb liegt und den Durchmesser der die Hülse aufnehmenden Bohrung weit übersteigt. Der Außenkonus ist angrenzend an den Sechskantkopf am Schaft der Kopfschraube angeformt. Die Kopfschraube wird durch eine unterhalb der Bauteilverbindung angeordnete Mutter unter Aufspreizen der Hülse festgelegt. Die Hülse stützt sich mit der Axial-anpressfläche, beispielsweise über eine Unterlegscheibe, an der Mutter ab, jedoch nicht an einem Bauteil der Bauteilverbindung. Die radial nach außen orientierte Anpressfläche der Hülse wird gegen die Innenwand der Bohrung gespannt. Die Länge der Kopfschraube ist größer als die Dicke der Bauteilverbindung. Der außenliegende Sechskantkopf beansprucht in Durchmesserrichtung relativ viel Einbauraum an der Oberseite der Bauteilverbindung, wie auch die unterseitige Mutter.

Aus FR 2 486 174 A sind eine Kopfschraube und eine Bauteilverbindung mit einer solchen Kopfschraube bekannt, wobei die Kopfschraube am Kopf keine Drehhandhabe hat, sondern der Kopf als mit dem Schaftdurchmesser beginnender Außenkonus gestaltet ist. Die Hülse hat eine Länge mindestens entsprechend der Dicke der Bauteilverbindung und anschließend an einen Kragen mit größerem Durchmesser als die Bohrung in einem ersten Bauteil einen ersten zylindrischen Außenwandabschnitt, der über eine Stufe in einen zweiten zylindrischen Außenwandabschnitt übergeführt ist. Auf das über die Bauteilverbindung nach unten vorstehende Ende des Schaftes ist eine Gegenmutter aufgeschraubt, die über den Außenkonus die Hülse aufspreizt und mit dem Kragen auf die Oberseite der Bauteilverbindung presst. Es wird oberhalb und unterhalb der Bauteilverbindung relativ viel Einbauraum beansprucht. Außerdem ist es schwierig, ein hohes Anzugsdrehmoment aufzubringen, weil der Kopf ohne Drehhandhabe zum Durchdrehen neigt.

Aus US 3 178 984 A sind eine Kopfschraube und eine Bauteilverbindung mit einer solchen Kopfschraube bekannt, wobei die Kopfschraube einen Innensechskantkopf mit größerem Außendurchmesser als dem Durchmesser des Schaftes aufweist. An der Unterseite des Kopfes ist ein kurzer Außenkonus mit einem sehr großen Konuswinkel angeformt.. Die Hülse enthält eine Innenbohrung mit einem entsprechenden Gegenkonus und eine konische Außenwand, die in konische Bohrungen der Bauteile passt. Der Konuswinkel der Außenwand ist erheblich kleiner als der Konuswinkel des Außenkonus an der Unterseite des Kopfes. Die Herstellung der Hülse mit der komplizierten Innenbohrung und auch die Herstellung der konischen Bohrungen in den Bauteilen sind aufwändig.

Der Erfindung liegt die Aufgabe zugrunde, eine Kopfschraube sowie eine Bauteilverbindung zu schaffen, die belastbar und lösesicher sind und minimalen Bauraum beanspruchen.

Die gestellte Aufgabe wird mit den Merkmalen des Patentanspruchs 1 und denen des Patentanspruchs 10 gelöst.

Dank der auf dem Außenkonus der Kopfschraube angeordneten, unter Anzugsspannung expandierbaren und axial anpressbaren Hülse liegen sowohl in Radialrichtung als auch in Axialrichtung insgesamt sehr große Anpressflächen vor, über die die Anzugsspannung wirkt, so dass eine Schraubverbindung mit der Kopfschraube sehr belastbar und lösesicher ist. Einerseits verteilt sich die Anzugsspannung großflächig auf die ineinanderpassenden Konusflächen am Kopf und der Hülse, andererseits überträgt die expandierte Hülse die Anzugsspannung sowohl über die radial nach außen orientierte Anpressfläche als auch über die axial in Einschraubrichtung orientierte Anpressfläche. Die Konusflächen ermöglichen nur ein moderates Anziehdrehmoment (bzw. Lösedrehmoment), da sie graduell wirken, und dennoch die gewünscht gesteigerte Belastbarkeit und Lösesicherheit gewährleisten. Die Kopfschraube ermöglicht bei erhöhter Belastbarkeit und hoher Lösesicherheit dank einer versenkten Anordnung des Kopfes zusätzlich kompakte Abmessungen einer Bauteilverschraubung in Durchmesserrichtung, da der Außenkonus direkt am Kopf geformt ist, der kleinere Konusenddurchmesser etwa dem Schaftdurchmesser entspricht, und der Außenkonus im Wesentlichen die gesamte Kopfhöhe einnimmt. Der Kopf hat eine Innendrehhandhabe, vorzugsweise einen Innensechskant, einen Schlitz oder einen Kreuzschlitz oder dgl.. Der Außendurchmesser des Kopfes und der Hülse lässt sich damit nämlich kleiner wählen als bei genormten Kopfschrauben, wie auch der Innendurchmesser des Anfangsabschnittes der Bohrung der Bauteilverschraubung, so dass in Durchmesserrichtung für den Kopf und die Hülse erheblich Platz eingespart wird. Die Konushöhe am Kopf ist gleich oder geringer als der maximale Konusdurchmesser.

In der Bauteilverschraubung stützt sich der Außenkonus großflächig im Innenkonus der Hülse ab, sobald die Kopfschraube ordnungsgemäß angezogen ist, und stützt sich die Hülse mit den radial und axial in Einschraubrichtung orientierten Anpressflächen großflächig an der Innenwand und der Schulter des Anfangsabschnittes bzw. der Kopfbohrung ab. Dies resultiert in gesteigerte Belastbarkeit und außerordentlich hoher Lösesicherheit der Bauteilverschraubung. In der Bauteilverschraubung ist der den Außenkonus aufweisende Kopf mit einer Innendrehhandhabe versehen und zusammen mit der Hülse vollständig im Anfangsabschnitt bzw. der Kopfbohrung unterbringbar, so dass an der Außenseite der Bauteilverschraubung keine überstehenden Komponenten vorliegen. Da der maximale Kopfdurchmesser zuzüglich der Stärke der Hülse ein deutlich geringeres Maß beansprucht, als der Kopf genormter Kopfschrauben, und auch der Anfangsabschnitt deutlich kleindurchmessriger ausfällt, als bei genormten Bauteilverschraubungen, wird in Durchmesserrichtung erheblich Platz eingespart, was beispielsweise in der Hochdruckhydraulik erhebliche Vorteile bringt, wenn der Bauteil optimal knapp bemessen dimensioniert sein muss.

Zweckmäßig beträgt der Konus-Spitzenwinkel etwa 10° oder weniger. Mit diesem Winkelbereich lässt sich ein relativ kurzer Anfangsabschnitt der Bohrung nutzen und baut sich der Reibschluss unter der Anzugsspannung allmählich bis zu einem optimal hohen Maximalwert auf. Ferner ist die Kopfschraube jederzeit problemlos wieder lösbar und kann gegebenenfalls zusammen mit derselben Hülse mehrfach verwendet werden.

Bei einer zweckmäßigen Ausführungsform sind die Kopfschraube und die Hülse aus gleichen oder zumindest ähnlichen Werkstoffen hergestellt, vorzugsweise aus einem Federstahl, was speziell für die Hülse zweckmäßig ist, weil sich diese beim Lösen der Bauteilverschraubung selbsttätig wieder expandiert. Dies gilt aber auch für Kopfschrauben aus anderen Materialien, wie Buntmetallen oder Kunststoff.

Bei einer zweckmäßigen Ausführungsform entspricht der größte Kopfdurchmesser mit am Kopf angeformtem Außenkonus nur etwa 120 % des Schaftdurchmessers. Dieses Maß ist beträchtlich kleiner als bei genormten Kopfschrauben und resultiert in Verbindung mit der Hülse bei kleinerem Innendurchmesser des Anfangsabschnittes mindestens in derselben Belastbarkeit und Lösesicherheit wie bei genormten Kopfschrauben mit jedoch deutlich größeren Kopfdurchmessern.

Bei einer zweckmäßigen Ausführungsform entspricht die Hülsenhöhe in etwa der Kopfhöhe, obwohl es auch möglich ist, nur einen axialen Teilbereich des Kopfes mit dem Außenkonus zu versehen, und beträgt, vorzugsweise, die minimale radiale Stärke der Hülsenwand nur etwa 10 % des Schaftdurchmessers. Daraus resultiert eine sehr kompakte Bauteilverschraubung.

Bei einer zweckmäßigen Ausführungsform sind die Oberflächen des Außenkonus und der Hülse geschliffen, zweckmäßig bei Verwendung von Stahl als Werkstoff für die Kopfschraube und den Konus. Dank der Schleifbearbeitung lässt sich mit moderatem Anziehdrehmoment hohe Belastbarkeit und extreme Lösesicherung herstellen.

Der wenigstens eine Expandier-Durchbrechung der Hülsenwand ist ein, vorzugsweise axialer, Schlitz, in dessen Bereich die Hülse unter der Anzugsspannung so expandiert, dass sie im Wesentlichen vollumfänglich in Reibschluss kommt. Die Schlitzweite beträgt nur etwa 15 % des Schaftdurchmessers.

Für die Gestaltung der Expandier-Durchbrechung bieten sich mehrere zweckmäßige Möglichkeiten an, die herstellungstechnisch einfach und kostengünstig sind. Im einfachsten Fall weist die Hülse nur einen über die Hülsenhöhe durchgehenden Schlitz auf. Flankierend kann zusätzlich zu dem durchgehenden Schlitz wenigstens ein weiterer, dann vorzugsweise diametraler, Schlitz vorgesehen sein, der sich ausgehend von einem Hülsenende nur über einen Teil der Hülsenhöhe erstreckt. Schließlich ist es sogar möglich, mindestens zwei, vorzugsweise diametrale, Schlitze vorzusehen, die sich ausgehend von einem Hülsenende oder von beiden Hülsenenden nur jeweils über einen Teil der Hülsenhöhe erstrecken. Dies soll jedoch nicht ausschließen, die Hülse beispielsweise aus zwei getrennten Schalen zu erstellen, die nicht miteinander verbunden sind.

Eine besonders kompakte, hoch belastbare und sehr lösungssichere Bauteilverschraubung ist gegeben, wenn der größte Kopfdurchmesser des den Außenkonus aufweisenden Kopfes nur etwa 120 % des Schaftdurchmessers entspricht, die minimale radiale Stärke der Hülse etwa 10 % des Schaftdurchmessers entspricht, und der Innendurchmesser des Anfangsabschnittes mit einer leichten Gleitpassung für die nicht expandierte Hülse nur geringfügig mehr als 140 % des Schaftdurchmessers entspricht. Etwa 140 % des Schaftdurchmessers bzw. Gewindedurchmessers resultieren in einer kompakten Abmessung in Durchmesserrichtung, die mit genormten Kopfschrauben nicht realisierbar ist.

Anhand der Zeichnungen werden Ausführungsformen des Erfindungsgegenstandes näher erläutert. Es zeigen:
- Fig. 1: eine Perspektivdarstellung einer Kopfschraube für eine Bauteilverschraubung, mit einer dem Kopf zugeordneten Hülse,
- Fig. 2: einen Längsschnitt einer Ausführungsform der Hülse,
- Fig. 3: eine Perspektivansicht einer weiteren Ausführungsform der Hülse,
- Fig. 4: eine Perspektivdarstellung einer weiteren Ausführungsform der Hülse,
- Fig. 5: eine Perspektivansicht einer geschnitten dargestellten Bauteilverschraubung,
- Fig. 6: einen Axialschnitt zu Fig. 5,
- Fig. 7: einen Axialschnitt einer weiteren Ausführungsform einer Bauteilverschraubung,
- Fig. 8: einen Axialschnitt einer weiteren Ausführungsform einer Bauteilverschraubung, und
- Fig. 9: einen Axialschnitt einer weiteren Ausführungsform einer Bauteilverschraubung, wobei die Ausführungsformen der Fig. 7, 8 und 9 nicht zur Erfindung gehören.

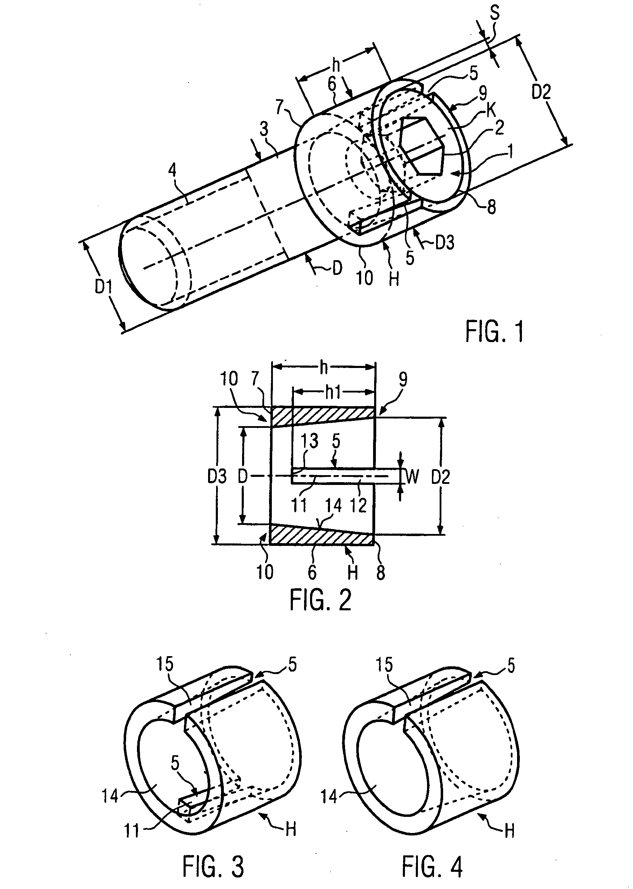

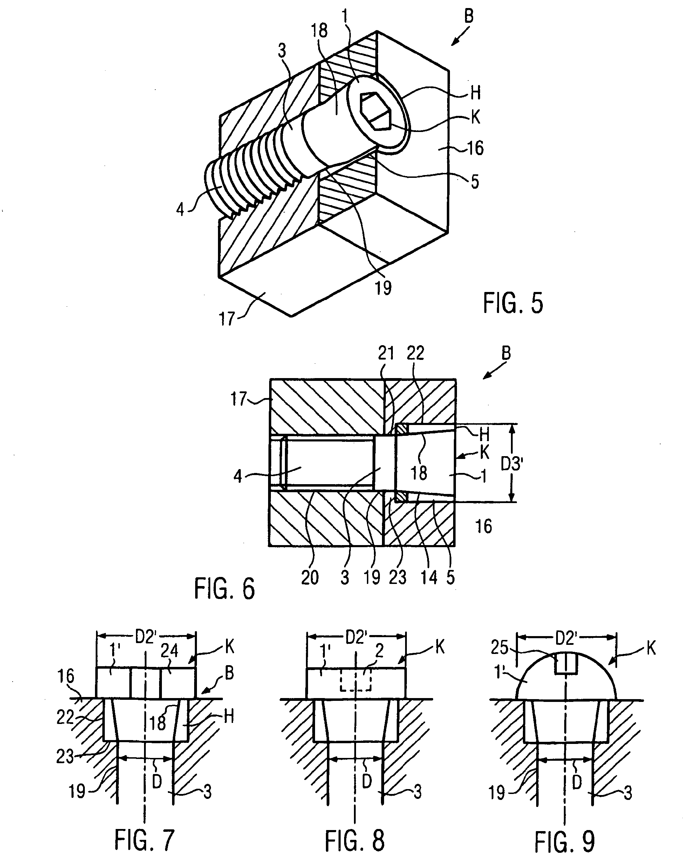

Eine in Fig. 1 gezeigte Kopfschraube K für eine beispielsweise in Fig. 5 gezeigte Bauteilverschraubung B weist einen Kopf 1 z.B. mit einer Innendrehhandhabe 2 (z.B. einen Innensechskant), einen sich an den Kopf anschließenden Schaft 3, und ein Gewinde 4 am Schaft auf. Der Kopf 1 ist mit einer Hülse H kombiniert, deren Höhe h (Fig. 2) im Wesentlichen der Kopfhöhe entsprechen kann, die in ihrer Hülsenwand wenigstens eine Expandier-Durchbrechung 5 aufweist, sowie eine radial nach außen orientierte, kreiszylindrische Anpressfläche 6 und eine in Einschraubrichtung axial orientierte, kreisringförmige Anpressfläche 7 an einem Ende 10. Am gegenüberliegenden Ende 9 der Hülse H liegt eine von hier zwei diametralen Expandier-Durchbrechungen 5 unterbrochene Kreisringfläche 8 vor, die mit der Oberseite des Kopfes 1 bündig sein kann, wenn die Hülse H auf die Kopfschraube K aufgebracht ist.

Der Schaft 3 der Kopfschraube K hat einen Schaftdurchmesser D, der in etwa einem Gewindedurchmesser D1 des Gewindes 4 entspricht. Der Kopf 1 hat einen maximalen Außendurchmesser D2, der beispielsweise nur etwa 120 % des Schaftdurchmessers D entspricht, während die Hülse H eine minimale Wandstärke S am Ende 9 aufweist, die etwa 10 % des Schaftdurchmessers D entspricht. Der Außendurchmesser D3 der kreiszylindrischen, hier radial orientierten Anpressfläche 6 der Hülse beträgt nur etwa 140 % des Schaftdurchmessers D. Die Hülsenhöhe h (Kopfhöhe) entspricht etwa dem Schaftdurchmesser D oder ist größer oder kleiner als dieser. Diese Maße sind nur eine zweckmäßige Auswahl und können individuell variiert werden.

In Fig. 2 ist gezeigt, dass die Hülse H an der Innenwand mit einem Innenkonus 14 geformt ist, der zu dem in Fig. 6 gezeigten Außenkonus 18 am Kopf 1 passt. Der Konus-Spitzenwinkel α beträgt beispielsweise etwa 10°, kann aber auch größer oder kleiner sein. Die in Fig. 2 angedeutete Ausführungsform weist, wie auch in Fig. 1 gezeigt, zwei diametral gegenüberliegende Expandier-Durchbrechungen 5 auf, nämlich jeweils einen axialen Schlitz 11, dessen offenes Ende bei 12 im Ende 9 der Hülse liegt, und der sich nur über einen Teilbereich h1 der Hülsenhöhe h bis zu einem Ende 13 erstreckt. Der Schlitz 11 ist axial gezeigt, könnte aber auch eine andere Orientierung aufweisen oder sogar kurvig oder gekrümmt verlaufen. Der größte Durchmesser des Innenkonus 14 ist mit D2 angedeutet, und entspricht dem maximalen Kopfdurchmesser D2 in Fig. 1. Der minimale Durchmesser des Innenkonus 14 entspricht etwa dem Schaftdurchmesser D. Die Weite W des Schlitzes 11 kann z.B. etwa 15 % des Schaftdurchmessers D betragen.

Zweckmäßig bestehen die Kopfschraube K und die Hülse H aus gleichen oder zumindest ähnlichen Werkstoffen, beispielsweise aus Federstahl, wobei zumindest der Außenkonus 18 am Kopf 1 und zumindest weitgehend alle Oberflächen der Hülse H geschliffen sind. Die Kreisringfläche 7 der Hülse H am Ende 10 kann radial orientiert sein, oder konisch sein. Das kleindurchmessrige Ende des Innenkonus 14 ist mit einer leichten Gleitpassung über den Schaft 3 schiebbar, bis der Innenkonus 14 auf dem Außenkonus 18 sitzt.

Die in Fig. 3 gezeigte Ausführungsform der Hülse H unterscheidet sich von der der Fig. 2 und 1 dadurch, dass eine Expandier-Durchbrechung 5 als der in Fig. 2 gezeigte Schlitz 11 ausgebildet ist, während eine diametral gegenüberliegende Expandier-Durchbrechung 5 als über die Hülsenhöhe durchgehender, hier axialer Schlitz 15 gestaltet ist. Auch der Schlitz 15 könnte eine Orientierung abweichend von einer axialen aufweisen und/oder gewellt verlaufen.

In der Ausführungsform in Fig. 4 weist die Hülse H nur eine einzige Expandier-Durchbrechung 5 auf, nämlich einen axial über die Hülsenhöhe durchgehenden Schlitz 15, der den Innenkonus 14 an einer Durchmesserstelle unterbricht.

Die in den Fig. 5 und 6 angedeutete Bauteilverschraubung B umfasst hier zumindest zwei Bauteile 16, 17, die gegeneinander zu spannen sind (als nicht beschränkendes Beispiel), wobei in die Bauteile 16, 17 eine Bohrung 19 eingebracht ist. Die Bohrung 19 (Fig. 6) weist z.B. einen Innengewindeabschnitt 20 für das Gewinde 4 auf, und einen glatten Abschnitt 21 zur Aufnahme des Schaftes 3, sowie einen Anfangsabschnitt 22 (Kopfbohrung) mit kreiszylindrischer Innenwand und einer in Einschraubrichtung wirkenden, kreisringförmigen Schulter 23 (hier z.B. radial orientiert). Der Kopf 1 der Kopfschraube K ist zusammen mit der Hülse H vollständig (oder teilweise) im Anfangsabschnitt 22 untergebracht, wobei die Anpressfläche 7 (Fig. 2) der Hülse H an die Schulter 23 angepresst ist. Unter Expandieren der Hülse H ist die radial orientierte Anpressfläche 6 an die Innenwand des Anfangsabschnittes 22 vollflächig angepresst, so dass die Anzugsspannung der Kopfschraube K im Bauteil 16 großflächig verteilt ist. Ferner wirkt die Anzugsspannung auch zwischen dem Außenkonus 18 und dem Innenkonus 14 auf deren Gesamtflächen, abzüglich der Fläche der wenigstens einen Expandier-Durchbrechung 5. Da der Innendurchmesser des Anfangsabschnittes 22 nur so groß zu bemessen sein braucht, dass er für die nicht expandierte Hülse H eine leichte Gleitpassung erzeugt, beansprucht die Bauteilverschraubung B in Durchmesserrichtung trotz hoher Belastbarkeit und guter Lösesicherheit minimalen Platz.

Die Fig. 7 bis 9 verdeutlichen eine Auswahl weiterer Ausführungsbeispiele von Bauteilverschraubungen B, bei denen in Durchmesserrichtung mehr Platz für den Kopf beansprucht wird und ein Überstand gegeben ist, jedoch die Belastbarkeit und die Lösesicherheit dank des Außenkonus 18 und der Hülse H in dem Anfangsabschnitt 22 hoch sind.

In Fig. 7 ist eine Kopfschraube K mit einem Kopf 1' dargestellt, der einen Außensechskant 24 aufweist, dessen Außendurchmesser (Schlüsselweite) D2' wesentlich größer ist als der Schaftdurchmesser D. Der Außenkonus 18 ist z.B. angrenzend an den Kopf 1' am Schaft 3 angeformt. Der Anfangsabschnitt 22 ist beispielsweise wie in Fig. 6 bemessen.

In Fig. 8 ist eine Kopfschraube K mit einem Kopf 1' beispielsweise genormter Abmessungen mit der Innendrehhandhabe 2 gezeigt, wobei der Außendurchmesser D2' des Kopfes 1' deutlich größer ist als der Schaftdurchmesser D. Die Bauteilschraubverbindung ist jedoch wie in Fig. 7 mit dem Außenkonus und der Hülse H im Anfangsabschnitt 22 gebildet.

Schließlich ist in Fig. 9 eine Kopfschraube K mit einem Kopf 1' mit größerem Kopfdurchmesser D2' als dem Schaftdurchmesser D gezeigt, die als Innendrehhandhabe einen Schlitz 24 oder einen Kreuzschlitz aufweist und wiederum unter Verwendung des Außenkonus 18 und der Hülse H in dem Anfangsabschnitt der Bohrung 19 festgelegt ist.

## Patentansprüche

1. Kopfschraube (K) für eine Bauteilverschraubung (B), mit einem eine Drehhandhabe (2) aufweisenden Kopf (1), einem den Kopf (1) tragenden Schaft (3), und einem Gewinde (4) am Schaft (3), wobei an der Kopfschraube (K) ein sich in Einschraubrichtung verjüngender Außenkonus (18) geformt und auf dem Außenkonus (18) eine Hülse (H) angeordnet ist, die einen auf den Außenkonus (18) passenden Innenkonus (14), einen kreiszylindrischen Außenumfang an der Hülsenaußenwand, wenigstens eine Expandier-Durchbrechung (5) in der Hülsenwand, und axial in Einschraubrichtung und radial nach außen orientierte Anpressflächen (6, 7) aufweist, **dadurch gekennzeichnet, dass** der Außenkonus (18) direkt am Kopf (1) geformt ist, dass der kleinere Konusenddurchmesser etwa dem Schaftdurchmesser (D) entspricht, dass der Außenkonus (18) im Wesentlichen die gesamte Kopfhöhe einnimmt, dass der Kopf (1) als Drehhandhabe (2) eine Innendrehhandhabe enthält, dass die Hülsenhöhe (h) in etwa der Kopfhöhe entspricht, und dass die Konushöhe des Außenkonus (18) gleich oder geringer ist als der maximale Konusdurchmesser (D2).

2. Kopfschraube nach Anspruch 1, **dadurch gekennzeichnet, dass** der Konus-Spitzenwinkel (α) etwa 10° beträgt.

3. Kopfschraube nach Anspruch 1, **dadurch gekennzeichnet, dass** die Innendrehhandhabe (2) ein Innensechskant ist.

4. Kopfschraube nach Anspruch 1, **dadurch gekennzeichnet, dass** die Kopfschraube (K) und die Hülse (H) aus gleichen oder zumindest ähnlichen Werkstoffen bestehen, vorzugsweise aus Federstahl.

5. Kopfschraube nach Anspruch 1, **dadurch gekennzeichnet, dass** der größte Kopfdurchmesser (D2) nur etwa 120 % des Schaftdurchmessers (D) entspricht.

6. Kopfschraube nach Anspruch 1, **dadurch gekennzeichnet, dass** die minimale radiale Stärke (s) der Hülsenwand etwa 10 % des Schaftdurchmessers (D) beträgt.

7. Kopfschraube nach Anspruch 4, **dadurch gekennzeichnet, dass** die Oberflächen des Außenkonus (18) und der Hülse (H) geschliffen sind.

8. Kopfschraube nach Anspruch 1, **dadurch gekennzeichnet, dass** die wenigstens eine Expandier-Durchbrechung (5) ein, vorzugsweise axialer, Schlitz (11, 15) mit einer Schlitzweite (W) etwa entsprechend 15 % des Schaftdurchmessers (D) ist.

9. Kopfschraube nach Anspruch 8, **dadurch gekennzeichnet, dass** die Hülse (H) einen über die Hülsenhöhe (h) durchgehenden Schlitz (15) und wenigstens einen weiteren, vorzugsweise diametralen, Schlitz (11) aufweist, der sich ausgehend von einem Hülsenende (9) nur über einen Teil (h1) der Hülsenhöhe (h) erstreckt, oder mindestens zwei, vorzugsweise diametrale, Schlitze (11), die sich ausgehend von einem Hülsenende (9) nur über einen Teil (h1) der Hülsenhöhe (h) erstrecken.

10. Bauteilverschraubung (B) aus wenigstens einem Bauteil (16, 17) und einer zumindest mit ihrem Schaft (3) in eine Bohrung (19) im Bauteil (16, 17) eingebrachten Kopfschraube (K) mit einem eine Drehhandhabe (2) aufweisenden Kopf (1), einem den Kopf (1) tragenden Schaft (3), und einem Gewinde (4) am Schaft (3), wobei an der Kopfschraube (K) ein sich in Einschraubrichtung verjüngender Außenkonus (18) geformt ist, auf dem eine Hülse (H) angeordnet ist, die einen auf den Außenkonus (18) passenden Innenkonus (14), einen kreiszylindrischen Außenumfang an der Hülsenwand, wenigstens eine Expandier-Durchbrechung (5) in der Hülsenwand, und axial in Einschraubrichtung und radial nach außen orientierte Anpressflächen (6, 7) aufweist, wobei die Hülse (H) unter Anzugsspannung der Kopfschraube (K) zumindest mit der radial orientierten Anpressfläche (6) gegen die Innenwand der Bohrung (19 expandiert ist, **dadurch gekennzeichnet, dass** die Bohrung (19) einen im Wesentlichen kreiszylindrischen, bis zu einer im Wesentlichen radialen Schulter (23) führenden Anfangsabschnitt (22) größer als der Schaftdurchmesser (D) des Schaftes (3) der Kopfschraube (K) aufweist, dass der Außenkonus (18) direkt am Kopf (1) geformt ist, dass die Hülse (H) unter Anzugsspannung der Kopfschraube (K) mit der radial orientierten Anpressfläche (7) gegen die Schulter (23) angepresst ist, und dass der eine Innendrehhandhabe (2) aufweisende Kopf (1) und die Hülse (H) vollständig im Anfangsabschnitt (22) untergebracht sind.

11. Bauteilverschraubung nach Anspruch 10, **dadurch gekennzeichnet, dass** der größte Kopfdurchmesser (D2) nur etwa 120 % des Schaftdurchmessers (D) entspricht, dass die minimale radiale Stärke (s) der Hülsenwand etwa 10 % des Schaftdurchmessers entspricht, und dass der Innendurchmesser des Anfangsabschnittes (22) mit einer leichten Gleitpassung für die nicht expandierte Hülse (H) nur geringfügig mehr als 140 % des Schaftdurchmessers (D) entspricht.

## Claims

1. Headed screw (K) for a component screw connect (B), comprising a head (1) including a rotation handle (2), a shaft (3) carrying the head (1), and a thread (4) at the shaft (3), wherein an outer cone (18) tapering in threading direction is formed at the headed screw (K) and a sleeve (H) is arranged on the outer cone (18), the sleeve comprising an inner cone (14) fitting on the outer cone (18), a circular cylindrical outer periphery at an outer wall of the sleeve, at least one expansion through hole (5) in the wall of the sleeve, and pressing surfaces (6, 7) oriented axially in threading direction and radially outwardly, **characterised in that** the outer cone (18) directly is formed at the head (1), that the smaller cone end diameter corresponds substantially to the shaft diameter (D), that the outer cone (18) occupies substantially the entire height of the head (1), that the rotation handle (2) of the head (1) is formed as an inner rotation handle, that the sleeve height (h) corresponds substantially with the head height, and that the cone height of the outer cone (18) is equal or smaller than the maximum cone diameter (D2).

2. Headed screw according to claim 1, **characterised in that** the apex angle (α) of the cone amounts to about 10°.

3. Headed screw according to claim 1, **characterised in that** the inner rotation handle (2) is a hexagon socket.

4. Headed screw according to claim 1, **characterised in that** the headed screw (K) and the sleeve (H) consist of equal or at least similar materials, preferably consist of spring steel.

5. Headed screw according to claim 1, **characterised in that** the largest head diameter (D2) only corresponds to about 120% of the shaft diameter (D).

6. Headed screw according to claim 1, **characterised in that** the minimum radial thickness (s) of the sleeve wall amounts to about 10% of the shaft diameter (D).

7. Headed screw according to claim 4, **characterised in that** the surfaces of the outer cone (18) and of the sleeve (H) are ground.

8. Headed screw according to claim 1, **characterised in that** the at least one expansion through hole (5) in the sleeve wall is a slit (11, 15) having a slit width (W) corresponding to about 15% of the shaft diameter (D), preferably an axial slit.

9. Headed screw according to claim 8, **characterised in that** the sleeve (H) comprises one slit (15) continuously extending across the sleeve height (h) and at least one further slit (11), preferably a diametral slit, extending from one sleeve end (9) only across a part (h1) of the sleeve height (h), or at least two, preferably diametral slits (11) which extend from one sleeve end (9) only across a part (h1) of the sleeve height (h).

10. Component screw connect (B) consisting of at least one component (16, 17) and of a headed screw (K) inserted with a shaft (3) into a bore (19) of the component (16, 17), the headed screw (K) having a head (1) comprising a rotation handle (2), the shaft (3) carrying the head (1), and a thread (4) at the shaft (3), wherein an outer cone (18) tapering in threading direction is formed at the headed screw (K), on which outer cone (18) a sleeve (H) is arranged, which has an inner cone (14) fitting on the outer cone (18), a circular cylindrical outer periphery at a sleeve wall, at least one expansion through hole (5) in the sleeve wall, and pressing surfaces (6, 7) oriented axially in threading direction and radially outwardly, wherein in the component screw connect (B) the sleeve (H) is expanded by virtue of the tightening force of the head screw (K) at least with the radially oriented pressing surface (6) against an inner wall of the bore (19), **characterised in that** the bore (19) has a starting section (22) larger than the shaft diameter (D) of the shaft (3) of the headed screw (K), the starting section (22) being substantially circular cylindrical and extends to a substantially radial shoulder (23), that the outer cone (18) is directly formed at the head (1), that the sleeve (H) is pressed with the radially oriented pressing surface (7) by virtue of the tightening force of the head screw (K) against the shoulder (23), and that the head (1) comprising an inner rotation handle (2) and the sleeve (H) are totally accommodated in the starting section (22) of the bore (19).

11. Component screw connect according to claim 10, **characterised in that** the largest head diameter (D2) only amounts to about 120% of the shaft diameter (D), that the minimal radial thickness (s) of the sleeve wall corresponds to about 10% of the shaft diameter, and that the inner diameter of the starting section (22) corresponds to only slightly more than 140% of the shaft diameter (D) in order to establish a slight sliding tolerance for the not expanded sleeve.

## Revendications

1. Vis à tête (K) pour un assemblage de pièces par vis (B), comprenant une tête (1) présentant un moyen de manoeuvre de rotation (2), une tige de vis (3) portant la tête (1), et un filetage (4) sur la tige de vis (3), vis à tête (K) sur laquelle est formé un cône extérieur (18) se rétrécissant dans la direction de vissage, et sur le cône extérieur (18) de laquelle est agencée une douille (H) qui présente un cône intérieur (14) adapté au cône extérieur (18), une périphérie extérieure cylindrique circulaire sur la paroi extérieure de la douille, au moins une brèche d'expansion (5) dans la paroi de la douille, et des surfaces d'appui (6, 7) orientées axialement dans la direction de vissage et radialement vers l'extérieur,
**caractérisée en ce que** le cône extérieur (18) est formé directement sur la tête (1), **en ce que** le plus petit diamètre de cône correspond environ au diamètre (D) de la tige de vis, **en ce que** le cône extérieur (18) couvre sensiblement la totalité de la hauteur de la tête, **en ce que** la tête (1) renferme, en guise de moyen de manoeuvre de rotation (2), un moyen de manoeuvre de rotation intérieur, **en ce que** la hauteur (h) de la douille correspond environ à la hauteur de la tête, et **en ce que** la hauteur de cône du cône extérieur (18) est égale ou inférieure au diamètre de cône maximal (D2).

2. Vis à tête selon la revendication 1, **caractérisée en ce que** l'angle au sommet (α) du cône vaut environ 10°.

3. Vis à tête selon la revendication 1, **caractérisée en ce que** le moyen de manoeuvre de rotation intérieur (2) est un six pans intérieur.

4. Vis à tête selon la revendication 1, **caractérisée en ce que** la vis à tête (K) et la douille (H) sont réalisées en matériaux identiques ou tout au moins similaires, de préférence en acier à ressort.

5. Vis à tête selon la revendication 1, **caractérisée en ce que** le plus grand diamètre de tête (D2) ne correspond environ qu'à 120% du diamètre (D) de la tige de vis.

6. Vis à tête selon la revendication 1, **caractérisée en ce que** l'épaisseur radiale minimale (s) de la paroi de la douille vaut environ 10% du diamètre (D) de la tige de vis.

7. Vis à tête selon la revendication 4, **caractérisée en ce que** les surfaces du cône extérieur (18) et de la douille (H) sont rectifiées.

8. Vis à tête selon la revendication 1, **caractérisée en ce que** ladite au moins une brèche d'expansion (5) est une fente (11, 15), de préférence axiale, présentant une largeur de fente (W) correspondant environ à 15% du diamètre (D) de la tige de vis.

9. Vis à tête selon la revendication 8, **caractérisée en ce que** la douille (H) présente une fente (15) continue s'étendant sur toute la hauteur (h) de la douille, et au moins une autre fente (11), de préférence diamétralement opposée, qui s'étend, à partir d'une extrémité de douille (9), uniquement sur une partie (h1) de la hauteur (h) de la douille, ou bien au moins deux fentes (11), de préférence diamétralement opposées, qui s'étendent, à partir d'une extrémité de douille (9), uniquement sur une partie (h1) de la hauteur (h) de la douille.

10. Assemblage de pièces par vis (B) constitué d'au moins une pièce (16, 17) et d'une vis à tête (K), qui est engagée au moins avec sa tige de vis (3) dans un alésage (19) de la pièce (16, 17), et comprend une tête (1) présentant un moyen de manoeuvre de rotation (2), une tige de vis (3) portant la tête (1), et un filetage (4) sur la tige de vis (3), vis à tête (K) sur laquelle est formé un cône extérieur (18) se rétrécissant dans la direction de vissage et sur lequel est agencée une douille (H), qui présente un cône intérieur (14) adapté au cône extérieur (18), une périphérie extérieure cylindrique circulaire sur la paroi extérieure de la douille, au moins une brèche d'expansion (5) dans la paroi de la douille, et des surfaces d'appui (6, 7) orientées axialement dans la direction de vissage et radialement vers l'extérieur, la douille (H), sous l'effet de la tension de serrage de la vis à tête (K), étant soumise à une expansion contre la paroi intérieure de l'alésage (19), au moins avec la surface d'appui (6) orientée radialement,
**caractérisé en ce que** l'alésage (19) présente un secteur de début (22) sensiblement cylindrique circulaire, qui mène à un épaulement (23) sensiblement radial, et est plus grand que le diamètre (D) de la tige de vis (3) de la vis à tête (K), **en ce que** le cône extérieur (18) est formé directement sur la tête (1), **en ce que** la douille (H), sous l'effet de la tension de serrage de la vis à tête (K), est pressée, avec la surface d'appui (7) orientée radialement, contre l'épaulement (23), et **en ce que** la tête (1) présentant un moyen de manoeuvre de
rotation intérieur (2) et la douille (H) sont entièrement logées dans le secteur de début (22).

11. Assemblage de pièces par vis selon la revendication 10, **caractérisé en ce que** le plus grand diamètre de tête (D2) ne correspond environ qu'à 120% du diamètre (D) de la tige de vis, **en ce que** l'épaisseur radiale minimale (s) de la paroi de douille correspond environ à 10% du diamètre de la tige de vis, et **en ce que** le diamètre intérieur du secteur de début (22), avec un ajustement glissant léger pour la douille (H) n'ayant pas subi l'expansion, ne correspond qu'à très légèrement plus de 140% du diamètre (D) de la tige de vis.
